# FASCICULE DE BREVET EUROPEEN

(11) **EP 2 836 809 B1**
(45) Date de publication et mention de la délivrance du brevet: **06.01.2016**
(21) Numéro de dépôt: 13716023.0
(22) Date de dépôt: 15.03.2013
(51) Int. Cl.: G01M 15/08, B60K 6/12, F02B 33/44, F02B 77/08, F02D 41/12, F02D 41/22, B60W 20/00

(54) **PROCÉDÉ DE DÉTECTION D'UNE PERTE DE COMPRESSION D'UN CYLINDRE D'UN SYSTÈME DE MOTORISATION HYBRIDE PNEUMATIQUE-THERMIQUE**
VERFAHREN ZUR ERKENNUNG EINES DRUCKVERLUSTES IN EINEM ZYLINDER EINES HYBRIDEN PNEUMATISCH-THERMISCHEN ANTRIEBSSYSTEMS
METHOD FOR DETECTING A LOSS OF COMPRESSION IN A CYLINDER OF A HYBRID PNEUMATIC-THERMAL DRIVE SYSTEM

(30) Priorité: 13.04.2012 FR 1253409
(43) Date de publication de la demande: 18.02.2015
(73) Titulaire: Peugeot Citroën Automobiles SA, 78140 Vélizy Villacoublay (FR)
(72) Inventeur: NOVATI, Jean, F-78420 Carrieres Sur Seine (FR)
(74) Mandataire: Renous Chan, Véronique
(86) Numéro de dépôt international: PCT/FR2013/050551
(87) Numéro de publication internationale: WO 2013/153301

(56) Documents cités:
- FR-A1- 2 922 162
- US-A- 4 633 707
- US-A- 5 569 841
- US-A1- 2011 153 146

## Description

L'invention concerne un procédé de détection d'une perte de compression dans un cylindre d'un système de motorisation hybride pneumatique-thermique et un procédé de détermination des cylindres d'un tel système de motorisation hybride présentant une perte de compression. L'invention se rapporte également à une unité électronique de commande adaptée à la mise en oeuvre de ces procédés et à une unité de motorisation comportant une telle unité électronique de commande. Enfin, l'invention vise un véhicule automobile qui comprend une telle unité de motorisation.

Le document FR-B-2 922 162 présente un système de motorisation hybride pneumatique-thermique pour véhicules automobiles. Ce système de motorisation hybride pneumatique-thermique combine un moteur thermique à combustion interne à quatre temps avec un dispositif de conversion et de stockage de l'énergie pneumatique. Le moteur comprend des cylindres, chaque cylindre accueillant un piston définissant une chambre de combustion dans le cylindre associé. Ce système de motorisation hybride comprend en outre un réservoir d'air sous pression, relié par une conduite à la chambre de combustion et comportant une soupape pour l'admission d'air sous pression supplémentaire dans la chambre de combustion.

Lors du fonctionnement du système de motorisation hybride à faible couple, lorsque l'utilisateur souhaite accroitre le couple du moteur, une quantité supplémentaire d'air est injectée à partir du réservoir, dans les chambres de combustion, lors du temps de compression, pour augmenter le couple moteur.

Ce type de système de motorisation hybride présente une baisse d'efficacité quand une baisse de compression intervient dans un cylindre du moteur thermique.

Par ailleurs, il est connu de FR 1 534 981 un procédé de mesure des pressions relatives de compression dans les cylindres d'un moteur. Selon ce procédé les pistons sont mus dans les cylindres à l'aide d'un démarreur électrique, alors que la combustion dans les cylindres est empêchée. Une variation de charge électrique du démarreur ou de la vitesse du moteur entrainé électriquement est ensuite contrôlée. Les pressions dans les cylindres sont déduites de ces variations mesurées. Ainsi, les pressions relatives dans les cylindres sont déduites de mesures d'autres grandeurs alors que le fonctionnement du moteur est simulé.

En outre, il est connu de US 4 633 707 un procédé de détection d'une perte de compression dans le cylindre d'un système de motorisation thermique.

Un but de l'invention est de fournir un procédé permettant de déterminer les cylindres d'un système de motorisation hybride thermique-pneumatique qui présentent une perte de compression, sans nécessiter l'arrêt du moteur thermique.

A cette fin, l'invention propose un procédé de détection d'une perte de compression dans un cylindre d'un système de motorisation hybride,
- le système de motorisation hybride comportant :
   ∘ au moins un cylindre ;
   ∘ un piston apte à se déplacer dans le cylindre et définissant, avec le cylindre, une chambre de combustion, et
- un réservoir d'air comprimé apte à être mis sélectivement en communication de fluide avec la chambre de combustion,
   le procédé comprenant les étapes de :
   a) coupure de l'alimentation en carburant de la chambre de combustion,
   b) mise en communication de fluide du réservoir d'air comprimé et de la chambre de combustion,
   c) mesure d'une pression d'air dans le réservoir d'air comprimé alors que le piston est au voisinage de sa position de point mort haut, et,
   d) comparaison de la pression d'air mesurée avec une valeur de référence.

De préférence, le procédé selon l'invention présente une ou plusieurs des caractéristiques suivantes, prises seules ou en combinaison :
- la mesure est réalisée sur une portion d'un cycle du piston, de préférence sur un demi-cycle du piston, centré autour de la position de point mort haut du piston, l'étape de comparaison de la pression d'air mesurée étant réalisée sur la même portion du cycle du piston, par rapport à une courbe de valeurs de référence ;
- la mesure de la pression d'air dans le réservoir d'air comprimé et la comparaison de cette mesure par rapport à la valeur de référence, ou la courbe de référence, sont réalisées sur une pluralité de cycles moteur, de préférence au moins cinq cycles ;
- une perte de compression dans un cylindre est détectée lorsque la différence entre la pression d'air mesurée et la valeur de référence ou la courbe de valeurs de référence, le cas échéant, est supérieure à une valeur seuil, cette valeur seuil étant de préférence fonction du débit d'air d'admission des gaz de combustion et/ou de la pression du réservoir d'air comprimé, lorsque le réservoir d'air comprimé n'est pas en communication de fluide avec la chambre de combustion.

L'invention se rapporte également à un procédé de détermination des cylindres d'un système de motorisation hybride présentant une perte de compression, le procédé comprenant les étapes de :
- mise en oeuvre du procédé de détection tel que décrit ci-avant dans toutes ses combinaisons, successivement pour chacun des cylindres du système de motorisation hybride ; et,
- enregistrement d'un identifiant de chacun des cylindres présentant une perte de compression.

L'invention vise aussi une unité électronique de commande, comprenant une mémoire sur laquelle est enregistré un programme spécialement conçu pour la mise en oeuvre du procédé de détection et/ou de détermination tels que décrits ci-avant dans toutes leurs combinaisons.

L'unité électronique de commande comprend en outre une mémoire pour enregistrer l'identifiant de chacun des cylindres présentant une perte de compression.

L'invention concerne aussi une unité de motorisation comprenant :
- un système de motorisation hybride comportant
   ∘ au moins un cylindre,
   ∘ un piston apte à se déplacer dans le cylindre et définissant, avec le cylindre, une chambre de combustion,
- un réservoir d'air comprimé apte à être mis sélectivement en communication de fluide avec la chambre de combustion, et
- l'unité électronique de commande ci-dessus.

Selon une variante, le système de motorisation hybride comporte au moins deux cylindres associés chacun avec un piston distinct pour définir deux chambres de combustion distinctes qui sont aptes à être mises sélectivement en communication de fluide avec le réservoir d'air comprimé au moyen de soupapes distinctes.

Enfin, l'invention concerne un véhicule automobile comprenant au moins deux roues motrices et une unité de motorisation telle que décrite ci-dessus, apte à entraîner les roues motrices du véhicule automobile.

D'autres caractéristiques et avantages de l'invention apparaîtront à la lecture de la description détaillée qui suit d'un mode de réalisation de l'invention, donné à titre d'exemple uniquement et en référence aux dessins qui montrent :
- figure 1, une vue schématique de l'unité de motorisation hybride pneumatique-thermique ;
- figure 2, un graphique qui indique l'identifiant des cylindres testés en fonction de cycles moteurs successifs.
- figure 3, une courbe représentant la pression dans le réservoir d'air en fonction de l'évolution de la position du vilebrequin d'un système de motorisation hybride comprenant un moteur thermique à quatre cylindres ;

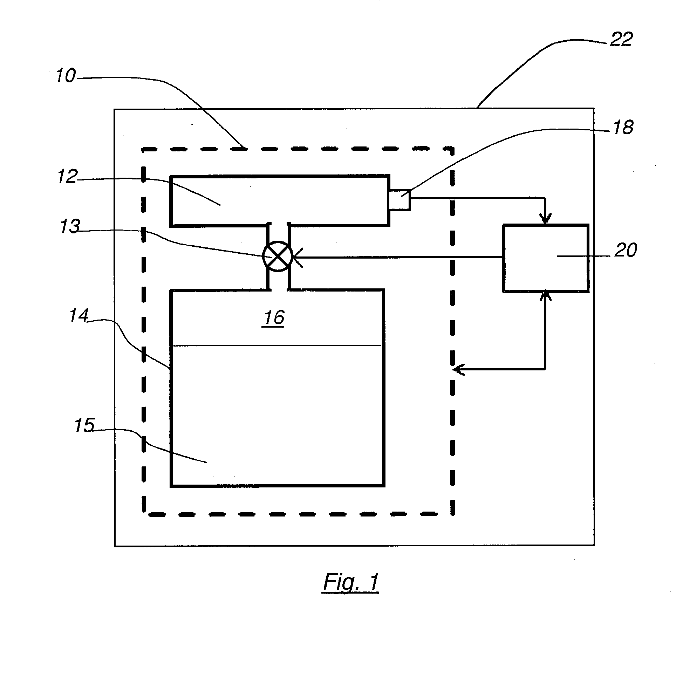

Un véhicule automobile selon l'invention comprend deux roues motrices et une unité de motorisation hybride pneumatique-thermique 22 pour les entraîner. L'unité de motorisation hybride pneumatique-thermique 22, telle qu'illustrée à la figure 1, comporte un système de motorisation hybride thermique-pneumatique 10 et une unité électronique de commande 20. Le système de motorisation hybride thermique-pneumatique 10 tel qu'illustré comporte :
- un cylindre 14,
- un piston 15 apte à se déplacer dans le cylindre 14 et définissant, avec le cylindre 14, une chambre de combustion 16, et
- un réservoir d'air comprimé 12 apte à être mis sélectivement en communication de fluide avec la chambre de combustion 16, au moyen d'une soupape 13.

Bien entendu, le système de motorisation peut comporter plusieurs cylindres 14. Dans ce cas, chaque cylindre 14 est associé à un piston 15 qui définit, à l'intérieur de chaque cylindre 14 une chambre de combustion 16 distincte. Dans ce cas, chaque chambre de combustion 16 peut être mise en communication de fluide avec le réservoir d'air comprimé 12 à travers des soupapes 13 distinctes. L'unité électronique de commande 20 commande l'ouverture et la fermeture de chaque soupape 13.

Un capteur de pression 18 est prévu pour la mesure de pression dans le réservoir d'air comprimé 12 du système de motorisation hybride 1,0. Ce capteur de pression 18 peut être situé dans le réservoir d'air comprimé 12. Ce capteur de pression 18 permet en outre de mesurer la pression dans le réservoir d'air comprimé 12 lorsque la chambre de combustion 16 est en communication de fluide avec le réservoir d'air comprimé 12, en d'autres termes lorsque la soupape 13 est ouverte.

L'unité de motorisation hybride pneumatique-thermique 22 peut fonctionner selon trois phases.

Une première phase (ou phase « thermique ») consiste à entraîner les roues motrices du véhicule automobile avec la seule énergie mécanique produite par la combustion classique dans la chambre de combustion 16. Dans cette phase, la soupape 13 est fermée, de sorte que le réservoir d'air comprimé 12 n'est pas en communication de fluide avec les chambres de combustion durant cette phase.

Une seconde phase (ou phase « moteur pneumatique ») consiste à adjoindre une quantité d'air comprimé supplémentaire aux éléments de la combustion. Cet ajout d'air comprimé permet d'accentuer le couple moteur, même à bas régime. Durant cette phase, le réservoir d'air comprimé 12 est en communication de fluide avec la chambre de combustion 16 durant le temps de compression, avant l'explosion du mélange dans la chambre de combustion 16.

Enfin, une troisième phase (ou phase « pompe ») est définie par le fait que les chambres de combustion 16 agissent comme compresseurs d'air et permettent ainsi le remplissage du réservoir 12 avec de l'air comprimé. Pour ce faire, l'alimentation en carburant des chambres de combustion 16 est coupée. Les chambres de combustion 16 ne sont alors alimentées qu'en air. Cette phase est donc mise en oeuvre essentiellement lors des décélérations ou freinages du véhicule automobile. Du fait de l'inertie du moteur, les pistons 15 sont entraînés dans les cylindres 14 et sont mis en oeuvre pour comprimer de l'air fourni par le conduit d'admission d'air. Dans cette troisième phase, le réservoir d'air comprimé 12 est en communication de fluide avec la chambre de combustion 16 uniquement durant le temps d'échappement.

La gestion des phases du système de motorisation hybride est assurée par l'unité électronique de commande 20.

L'unité électronique de commande 20 comprend, en outre, une mémoire sur laquelle est enregistré un programme spécialement conçu pour la mise en oeuvre du procédé de détection d'une perte de compression d'un cylindre du système de motorisation hybride 10 tel qu'il va être décrit ci-après.

Ce procédé de détection comporte tout d'abord une étape de coupure de l'alimentation en carburant d'une chambre de combustion 16, pour éviter qu'une explosion ne se produise dans la chambre de combustion 16 durant la mise en oeuvre du procédé. En d'autres termes, le procédé de détection est mis en oeuvre durant les phases de pied levé, c'est-à-dire lorsque le pied du conducteur n'est pas en appui sur la pédale d'accélérateur. En variante, le procédé peut être mis en oeuvre dans une plage de régime prédéterminée, définie par calibration.

Dans une deuxième étape du procédé, la chambre de combustion 16 est mise en communication de fluide avec le réservoir d'air comprimé 12. En l'espèce, ceci est réalisé en ouvrant la soupape 13.

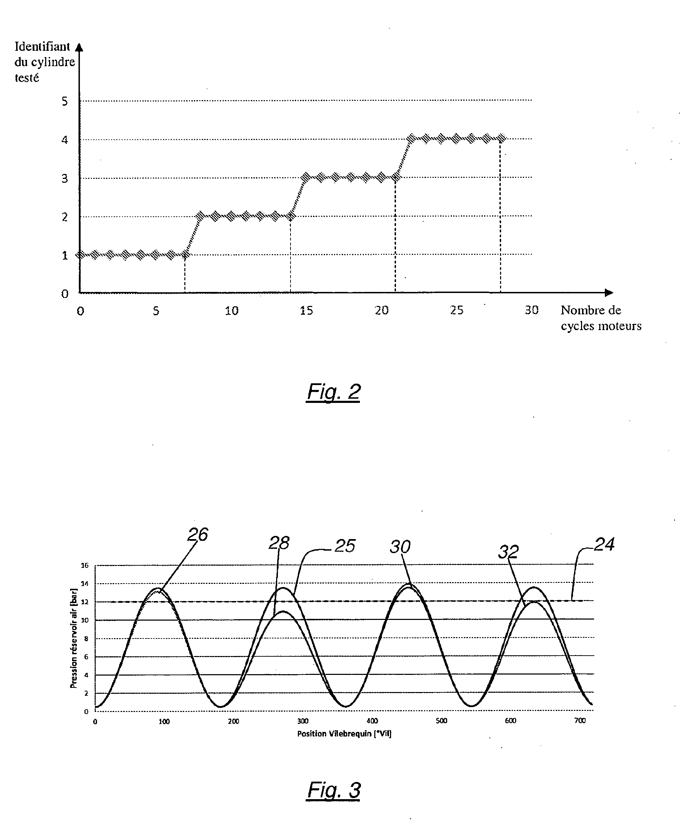

Lorsque le moteur thermique comprend plusieurs cylindres 14, le procédé peut être mis en oeuvre successivement dans chaque cylindre 14. En d'autres termes, un seul cylindre 14 est en communication de fluide avec le réservoir d'air comprimé 12 à la fois. Ceci est notamment illustré par la figure 2. En outre, cette figure 2 illustre que la mesure de pression peut être réalisée plusieurs fois dans le même cylindre 14. En d'autres termes, les mêmes étapes peuvent être mise en oeuvre successivement plusieurs fois pour le même cylindre 14, ceci afin d'obtenir un résultat plus précis. Cinq itérations du procédé pour chaque cylindre 14 permettent un bon compromis entre la précision du résultat et le temps nécessaire à l'obtention de ce résultat.

Le procédé se poursuit ensuite par la mesure, au moyen du capteur de pression 18, de la pression à l'intérieur du système de motorisation hybride 10. Plus précisément, on mesure la pression d'air dans l'espace délimité par le réservoir d'air comprimé 12 et la chambre de combustion 16 en communication de fluide avec le réservoir d'air comprimé 12.

Cette mesure de pression peut être ponctuelle, en un point du voisinage du point mort haut du piston (position du piston qui correspond à la compression la plus importante). Par voisinage, on entend un intervalle généralement compris entre -40° et +40, notamment entre -30° et +30° autour de point mort haut, de préférence entre -15 ° et +15 °.

On compare alors la valeur de pression mesurée à une valeur de référence. Cette comparaison peut être réalisée en tenant compte d'une marge. En d'autres termes, une perte de compression dans le cylindre 14 n'est détectée que si la valeur de pression mesurée est inférieure à la valeur de référence, d'une valeur seuil.

En variante, la mesure de la pression peut être réalisée sur un demi-cycle du piston, centré autour de la position de point mort haut. Dans ce cas, on compare la courbe à une courbe de référence. Là encore, il est possible de tenir compte d'une marge.

La figure 3 illustre un exemple de mise en oeuvre de ce procédé dans le cas d'un système de motorisation hybride dont le moteur thermique comprend quatre cylindres qui sont testés successivement. Pour chacun des quatre cylindres, on a mesuré la pression sur un demi-cycle du piston associé, chaque mesure étant illustrée par une courbe 26, 28, 30, 32 sur la figure 3. La mesure dans chaque cylindre peut alors être comparée à une valeur de référence illustrée par la courbe 24. En d'autres termes, une perte de compression est détectée dans le cas où la pression maximale associée au cylindre est inférieure à la valeur de référence.

En variante, la mesure dans chaque cylindre est comparée avec une courbe de référence 25.

Dans l'exemple illustré, les cylindres correspondant aux courbes 28 et 32 sont considérés comme présentant une perte de compression.

Le procédé de détection décrit ci-avant permet ainsi d'identifier les cylindres qui présentent une perte de compression.

Il est alors possible d'enregistrer un identifiant de chacun de ces cylindres présentant une perte de compression. Cet enregistrement peut notamment être réalisé sur une mémoire de l'unité électronique de commande 20. Cet identifiant peut ainsi être accessible par un outil de diagnostic après-vente.

Ainsi, le procédé décrit, permet de réduire le coût et le temps de dépannage d'un véhicule équipé d'une unité de motorisation hybride pneumatique thermique 22 en cas de perte de compression d'un ou de plusieurs cylindres qu'il comporte.

L'invention n'est pas limitée au mode de réalisation présenté ci-dessus, elle peut être mise en oeuvre par l'homme du métier dans d'autres applications qui lui sembleront évidentes.

## Revendications

1. Procédé de détection d'une perte de compression dans un cylindre d'un système de motorisation hybride pneumatique-thermique (10),
- le système de motorisation hybride (10) comportant :
∘ au moins un cylindre (14) ;
∘ un piston (15) apte à se déplacer dans le cylindre (14) et définissant, avec le cylindre (14), une chambre de combustion (16), et
- un réservoir d'air comprimé (12) apte à être mis sélectivement en communication de fluide avec la chambre de combustion (16),
procédé **caractérisé en ce qu'**il comprend les étapes de :
a) coupure de l'alimentation en carburant de la chambre de combustion (16),
b) mise en communication de fluide du réservoir d'air comprimé (12) et de la chambre de combustion (16),
c) mesure d'une pression d'air dans le réservoir d'air comprimé (12) alors que le piston (15) est au voisinage de sa position de point mort haut, et,
d) comparaison de la pression d'air mesurée avec une valeur de référence.

2. Procédé selon la revendication 1, **caractérisé en ce que** la mesure est réalisée sur une portion d'un cycle du piston (15), de préférence sur un demi-cycle du piston (15), centré autour de la position de point mort haut du piston (15), l'étape de comparaison de la pression d'air mesurée étant réalisée sur la même portion du cycle du piston (15), par rapport à une courbe de valeurs de référence (25).

3. Procédé selon l'une des revendications précédentes, **caractérisé en ce que** la mesure de la pression d'air dans le réservoir d'air comprimé (12) et la comparaison de cette mesure par rapport à la valeur de référence, ou la courbe de référence (25), sont réalisées sur une pluralité de cycles moteur, la pluralité comportant de préférence au moins cinq cycles.

4. Procédé selon l'une quelconque des revendications précédentes, **caractérisé en ce qu'**une perte de compression dans un cylindre (14) est détectée lorsque la différence entre la pression d'air mesurée et la valeur de référence ou la courbe de valeurs de référence (25), le cas échéant, est supérieure à une valeur seuil, cette valeur seuil étant de préférence fonction du débit d'air d'admission des gaz de combustion et/ou de la pression du réservoir d'air comprimé, lorsque le réservoir d'air comprimé (12) n'est pas en communication de fluide avec la chambre de combustion (16).

5. Procédé de détermination des cylindres (14) d'un système de motorisation hybride (10) présentant une perte de compression, le procédé comprenant les étapes de :
- mise en oeuvre du procédé selon l'une quelconque des revendications 1 à 4, successivement pour chacun des cylindres (14) du système de motorisation hybride (10) ; et,
- enregistrement d'un identifiant de chacun des cylindres présentant une perte de compression.

6. Unité électronique de commande (20), comprenant une mémoire sur laquelle est enregistré un programme spécialement conçu pour la mise en oeuvre du procédé selon l'une quelconque des revendications précédentes.

7. Unité électronique de commande (20) selon la revendication 6, comprenant en outre une mémoire pour enregistrer l'identifiant de chacun des cylindres présentant une perte de compression.

8. Unité de motorisation (22) comprenant :
- un système de motorisation hybride (10) comportant
∘ au moins un cylindre (14),
∘ un piston (15) apte à se déplacer dans le cylindre (14) et définissant, avec le cylindre (14), une chambre de combustion (16),
- un réservoir d'air comprimé (12) apte à être mis sélectivement en communication de fluide avec la chambre de combustion (16), et
- une unité électronique de commande (20) selon la revendication 6 ou 7.

9. Unité de motorisation (22) selon la revendication 8, dans laquelle le système de motorisation hybride (10) comporte au moins deux cylindres (14) associés chacun avec un piston (15) distinct pour définir deux chambres de combustion (16) distinctes qui sont aptes à être mises sélectivement en communication de fluide avec le réservoir d'air comprimé (12) au moyen de soupapes (13) distinctes.

10. Véhicule automobile comprenant au moins deux roues motrices et une unité de motorisation (22) selon la revendication 9, l'unité de motorisation (22) étant apte à entraîner les roues motrices du véhicule automobile.

## Patentansprüche

1. Verfahren zur Erkennung eines Druckverlustes in einem Zylinder eines hybriden pneumatisch-thermischen Antriebssystems (10),
- wobei das hybride Antriebssystem (10) Folgendes umfasst:
∘ mindestens einen Zylinder (14),
∘ einen Kolben (15), der geeignet ist, um sich in dem Zylinder (14) zu bewegen, indem er mit dem Zylinder (14) eine Brennkammer (16) definiert, und
- einen Druckluftbehälter (12), der geeignet ist, um selektiv in Flüssigkeitskommunikation mit der Brennkammer (16) gestellt zu werden,
Verfahren **dadurch gekennzeichnet, dass** es die folgenden Schritte aufweist:
a) Abschalten der Kraftstoffversorgung der Brennkammer (16),
b) Herstellen der Fluidkommunikation des Druckluftbehälters (12) und der Brennkammer (16),
c) Messen eines Luftdrucks in dem Druckluftbehälter (12), während sich der Kolben (15) in der Nähe seiner oberen Totpunktposition befindet, und
d) Vergleichen des gemessenen Luftdrucks mit einem Referenzwert.

2. Verfahren nach Anspruch 1, **dadurch gekennzeichnet, dass** die Messung auf einem Abschnitt eines Zyklus des Kolbens (15) ausgeführt wird, vorzugsweise auf einem halben Zyklus des Kolbens (15), der um die obere Totpunktposition des Kolbens (15) zentriert ist, wobei der Schritt des Vergleichens des gemessenen Luftdrucks auf demselben Abschnitt des Zyklus des Kolben (15) in Bezug zu einer Referenzwertkurve (25) ausgeführt wird.

3. Verfahren nach einem der vorhergehenden Ansprüche, **dadurch gekennzeichnet, dass** die Messung des Luftdrucks in dem Druckluftbehälter (12) und der Vergleich dieser Messung mit dem Referenzwert oder der Referenzkurve (25) auf mehreren Motorzyklen ausgeführt werden, wobei die mehreren Motorzyklen vorzugsweise mindestens fünf Zyklen aufweisen.

4. Verfahren nach einem der vorhergehenden Ansprüche, **dadurch gekennzeichnet, dass** ein Druckverlust in einem Zylinder (14) erfasst wird, wenn der Unterschied zwischen dem gemessenen Luftdruck und dem Referenzwert oder der Referenzwertkurve (25) gegebenenfalls größer ist als ein Schwellenwert, wobei dieser Schwellenwert bevorzugt von dem Einlassluftdurchsatz der Verbrennungsgase und/oder dem Druck des Druckluftbehälters abhängt, wenn der Druckluftbehälter (12) nicht in Fluidkommunikation mit der Brennkammer (16) ist.

5. Verfahren zum Bestimmen der Zylinder (14) eines hybriden Antriebssystems (10), das einen Druckverlust aufweist, wobei das Verfahren die folgenden Schritte umfasst:
- Umsetzung des Verfahrens nach einem der Ansprüche 1 bis 4 aufeinanderfolgend für jeden der Zylinder (14) des hybriden Antriebssystems (10), und
- Aufzeichnen eines Identifikators jedes der Zylinder, der einen Druckverlust aufweist.

6. Elektronische Steuereinheit (20), die einen Speicher umfasst, auf dem ein Programm aufgezeichnet ist, das speziell zur Umsetzung des Verfahrens nach einem der vorhergehenden Ansprüche konzipiert ist.

7. Elektronische Steuereinheit (20) nach Anspruch 6, die außerdem einen Speicher umfasst, um den Identifikator jedes der Zylinder, die einen Druckverlust aufweisen, aufzuzeichnen.

8. Antriebseinheit (22), die Folgendes umfasst:
- ein hybrides Antriebssystem (10), das Folgendes umfasst
• mindestens einen Zylinder (14),
• einen Kolben (15), der geeignet ist, sich in einem Zylinder (14) zu bewegen und der mit dem Zylinder (14) eine Brennkammer (16) definiert,
- einen Druckluftbehälter (12), der geeignet ist, selektiv in Fluidkommunikation mit der Brennkammer (16) gestellt zu werden, und
- eine elektronische Steuereinheit (20) nach Anspruch 6 oder 7.

9. Antriebseinheit (22) nach Anspruch 8, bei der das hybride Antriebssystem (10) mindestens zwei Zylinder (14) umfasst, die jeweils mit einem getrennten Kolben (15) assoziiert sind, um zwei getrennte Brennkammern (16) zu definieren, die geeignet sind, um selektiv mit dem Druckluftbehälter (12) mittels getrennter Ventile (13) in Fluidkommunikation gesetzt zu werden.

10. Kraftfahrzeug, das mindestens 2 Antriebsräder und eine Antriebseinheit (22) nach Anspruch 9 umfasst, wobei die Antriebseinheit (22) geeignet ist, die Antriebsräder des Kraftfahrzeugs anzutreiben.

## Claims

1. A method for detecting a loss of compression in a cylinder of a hybrid pneumatic-thermal drive system (10),
- the hybrid drive system (10) comprising:
∘ at least one cylinder (14);
∘ a piston (15) capable of moving inside the cylinder (14) and defining, together with the cylinder (14), a combustion chamber (16), and
- a compressed air tank (12) capable of being selectively placed in fluid communication with the combustion chamber (16),
the method **characterized in that** it includes the steps of:
a) cutting off the fuel supply to the combustion chamber (16),
b) placing the compressed air tank (12) and the combustion chamber (16) in fluid communication with each other,
c) measuring the air pressure inside the compressed air tank (12) while the piston (15) is close to the top dead centre position thereof, and,
d) comparing the measured air pressure to a reference value.

2. The method according to Claim 1, **characterized in that** the measurement is carried out over a portion of a cycle of the piston (15), preferably over a half-cycle of the piston (15), centred around the top dead centre position of the piston (15), the comparison step of the measured air pressure being realized over the same portion of the cycle of the piston (15), with respect to a curve of reference values (25).

3. The method according to one of the preceding claims, **characterized in that** the measurement of the air pressure in the compressed air tank (12) and the comparison of this measurement with respect to the reference value, or the reference curve (25), are realized over a plurality of engine cycles, the plurality comprising preferably at least five cycles.

4. The method according to any one of the preceding claims, **characterized in that** a loss of compression in a cylinder (14) is detected when the difference between the measured air pressure and the reference value or the curve of reference values (25), if applicable, is greater than a threshold value, this threshold value being preferably a function of the flow of intake air of the combustion gases and/or of the pressure of the compressed air tank, when the compressed air tank (12) is not in fluid communication with the combustion chamber (16).

5. A determination method of the cylinders (14) of a hybrid drive system (10) having a loss of compression, the method including the steps of:
- implementing the method according to any one of Claims 1 to 4, successively for each of the cylinders (14) of the hybrid drive system (10); and
- recording of an identifier of each of the cylinders having a loss of compression.

6. An electronic control unit (20), including a memory on which there is recorded a program especially designed for the implementation of the method according to any one of the preceding claims.

7. An electronic control unit (20) according to Claim 6, further including a memory for recording the identifier of each of the cylinders having a loss of compression.

8. A drive unit (22) including:
- a hybrid drive system (10) comprising:
∘ at least one cylinder (14),
∘ a piston (15) capable of moving inside the cylinder (14) and defining, together with the cylinder (14), a combustion chamber (16),
- a compressed air tank (12) capable of being selectively placed in fluid communication with the combustion chamber (16), and
- an electronic control unit (20) according to Claim 6 or 7.

9. A drive unit (22) according to Claim 8, in which the hybrid drive system (10) comprises at least two cylinders (14) each associated with a distinct piston (15) to define two distinct combustion chambers (16) which are capable of being selectively placed in fluid communication with the compressed air tank (12) by means of distinct valves (13).

10. A motor vehicle including at least two driving wheels and a drive unit (22) according to Claim 9, the drive unit (22) being capable of driving the driving wheels of the motor vehicle.
